# EUROPEAN PATENT APPLICATION

(11) **EP 2 623 302 A1**
(43) Date of publication of application: **07.08.2013**
(21) Application number: 12153242.8
(22) Date of filing: 31.01.2012
(51) Int. Cl.: B29C 70/44, B30B 5/02, B32B 37/00, B29K 105/08

(54) **Agitation assisted vacuum bagging process and apparatus therefor**

(71) Applicant: Eire Composites, Indreabhán, Co. Galway (IE)
(72) Inventor: Feerick, Patrick, Indreabhán, Co. Galway (IE); Ó Bradaigh, Conchúr, Indreabhán, Co. Galway (IE); Doyle, Adrian, Indreabhán, Co. Galway (IE); Doyle, Derrick, Indreabhán, Co. Galway (IE); Doyle, Fintan, Indreabhán, Co. Galway (IE)
(74) Representative: Connor, Marco Tom

(57) **Abstract**

The present invention concerns a process for consolidating a fibre reinforced laminate using a mattress (2) formed by at least two inflatable bladders (2a-2e), said mattress covering substantially the whole surface of the laminate (3),
characterized in that,
(f) Each bladder (2a-2e) of the mattress (2) is connected to a source of pressurized gas (11) and to a source of vacuum (10b), and in that
(g) A first bladder (2a) of the mattress (2) is inflated, while at the same time a second bladder (2b) of the mattress is deflated with vacuum.

## Description

### Technical Field

The present invention relates to a vacuum bagging process for consolidating high performance pre-impregnated fibre reinforced composite laminates. In particular, it concerns a consolidation process allowing the production of high performance composites requiring no autoclave. An apparatus for carrying such process is also described.

### Background for the invention

High performance composite parts can be manufactured by stacking a number of pre-impregnated plies --commonly called prepregs-- consisting of reinforcing fibres, usually oriented, impregnated with a thermoplastic polymer or a thermoset resin precursor which is not or only partially cured. Such stacks are enclosed into a vacuum bag provided with at least one vacuum port for evacuating the air contained therein. Temperature and pressure are then applied to the vacuum bag in order to first lower the viscosity of the resin, drive the flow of the resin to consolidate the individual plies to form a laminate and, for thermoset resins, cure the resin. All these operations are usually carried out in an autoclave able to contain the vacuum bag and to generate an atmosphere therein which is heated to temperatures of the order of 200-420°C and pressurized at a pressure of the order of 1 to 10 bar above atmospheric, to assist consolidation of the vacuum bagged composite part. Unfortunately, vacuum bagging of prepregs cannot be satisfactorily carried out without the external application of pressure, to date possible only with autoclaves.

Autoclaves are massive and expensive apparatuses available only in a limited number of production companies and requiring considerable time and energy to heat and pressurize the whole inner volume thereof to the processing temperature and pressure. Furthermore, the size of a composite part manufactured by autoclave is limited to the size of the autoclave. All these elements render autoclave forming a very expensive process and limit the use of prepregs to high performance applications with limited production volumes, typically in aerospace.

The present invention proposes a solution for consolidating prepreg laminates enclosed in a vacuum bag without the need of an autoclave, yet yielding similar consolidation levels of the finished composite parts in a much shorter time and consuming considerably less energy than henceforth achieved.

### Summary of the invention

The present invention is defined in the appended independent claims. Preferred embodiments are defined in the dependent claims.

In particular, the present invention concerns a process for consolidating a fibre reinforced laminate comprising the following steps:
(a) Providing a tool comprising a first, front mould defining a first main face of the laminate and a second, movable, back mould which, in operating position, is separated from the first, front mould by a gap,
(b)Stacking several plies of a pre-impregnated fibre reinforced resin to form a layup,
(c) Laying the layup (3) onto the first, front mould (1 a) and enclosing it into a vacuum bag (4) comprising a vacuum port connected to a source of vacuum (10a),
(d) Laying on top of the vacuum bag (4) a mattress (2) formed by at least two inflatable bladders (2a-2e), said mattress covering substantially the whole surface of the laminate (3),
(e) Positioning the second, back mould (1 b) into its operating position, wherein the gap between first, front mould (1a) and second, back mould (1b) is such that the vacuum bag (4) containing the layup (3) and the mattress (2) with deflated bladders (2a-2e) snuggly fit between the front and back moulds,
(f) Bringing the temperature of the layup to its consolidating temperature and activating the vacuum pump (10a) to decrease the pressure inside the vacuum bag, Characterized in that,
(g)Each bladder (2a-2e) of the mattress (2) is connected to a source of pressurized gas (11) and to a source of vacuum (10b), and in that
(h)A first bladder (2a) of the mattress (2) is inflated, while at the same time a second bladder (2b) of the mattress is deflated with vacuum.

In order to enhance the dislodging and evacuation of any air bubbles trapped in the prepreg, it is preferred that each bladder be intermittently inflated and deflated at least twice, and even more times, during the consolidation process. In most applications, each bladder is not required to be inflated to a pressure higher than 10 bar. Generally, a pressure of not more than 7 bar, preferably not more than 5 bar, most preferably not more than 2 bar suffices to fully consolidate a composite laminate.

The process is more efficient if the pressurized zone of the mattress formed by the pressurized bladders applies a pressure onto a first portion of the vacuum bag remote from the at least one vacuum port and moves towards said vacuum port(s), so as to literally drive the air towards the vacuum port(s). For example, the pressurized zone can move from the first portion of the vacuum bag towards said vacuum port forming a pressurized line which moves in the direction of the vacuum ports. Preferably the pressurized line sweeps at least twice over the surface of the vacuum bag. In an alternative embodiment, the pressurized zone forms a closed loop pressurized line starting from a central point of the mattress and advancing radially towards the periphery of the mattress. In such embodiment, the vacuum bag preferably comprises several vacuum ports arranged around the periphery thereof.

The present invention also concerns a kit of parts for the consolidation of a fibre reinforced laminate comprising
(a) a tool comprising a first, front mould defining a first main face of the laminate and a second, movable, back mould which, in operating position, is separated from the first, front mould by a gap,
(b)a sheet material suitable for forming a vacuum bag provided with at least one vacuum port connectable to a source of vacuum and defining an inner volume suitable for containing a layup made of different plies of prepreg material;
(c) a mattress formed by at least two inflatable bladders, said mattress covering substantially the whole area of a main surface of the vacuum bag,
(d) heating means for heating an object located within the gap between front and back moulds,
(e) a source of pressure and a source of vacuum connectable to each bladder of the mattress individually,
(f) Control means for bringing in fluid communication the source of pressure and the source of vacuum with each bladder individually,

Wherein the gap between the front and back moulds, when in operating position is such that the vacuum bag filled with a laminate to be consolidated and the mattress stacked thereon with deflated bladders fit snuggly between the front and back moulds. The heating means may, for example, be integrated in the front and/or back mould.

In a preferred embodiment, said control means comprise a valve system, which is preferably controlled by a CPU, wherein each bladder is in fluid communication with, on the one hand, the pressure source and, on the other hand, with the vacuum source, each communication controlled by a corresponding valve. This allows the use of a single pressure source and a single vacuum source to control the pressure of all the bladders of the mattress.

In one embodiment of the invention, each bladder extends in a first direction along the whole length of the mattress, and such bladders are disposed side by side over the whole length of the mattress along a second direction transverse to the first direction over the whole width of the mattress; the first and second directions defining the planes over which extend the top and bottom main surfaces of the mattress. This geometry permits to arrange all the connections to the pressure and vacuum sources on the side of the mattress, the tubes thus running laterally out of the gap formed between the front and back moulds to the pressure and vacuum sources.

In an alternative embodiment, several bladders are disposed side by side over the whole length of the mattress along a first direction and along a second direction transverse to the first direction, thus forming a tiled structure. The bladders may form rows of substantially straight lines like a chessboard or, alternatively, may be arranged in a staggered pattern. When bladders have no access to the periphery of the mattress, it is advantageous to accommodate tubes in the second, back mould: a first end of each tube being connectable to a source of pressure or of vacuum and the second end of each tube emerging out of the face of the second, back mould in contact with the mattress, said second ends being connectable and located at positions corresponding to ports provided on each bladder.

The inner volume of the vacuum bag can be defined by two sheets sealed around the whole perimeter thereof, but for the vacuum ports. In this embodiment, the layup is generally enclosed in the vacuum bag prior to laying the bag containing the layup onto the first main surface of the front mould. Alternatively, it can be advantageous to define the inner volume of the vacuum bag by a sheet sealed over the whole perimeter thereof to the first main surface of the front mould. In this embodiment, the layup is first laid onto the front mould and a sheet is laid over the layup and sealed to the first surface of the front mould.

A mattress formed by at least two inflatable bladders, each connected to a source of vacuum and to a source of pressure can thus be advantageously used for dislodging and displacing air bubbles entrapped in a fibre reinforced multiply laminate upon consolidation thereof. The kit of parts described above offers an alternative to autoclaves for the manufacturing of composite parts offering considerable advantages over the latter. In particular, the equipment is substantially cheaper than an autoclave and can be afforded by a larger number of manufacturing companies, thus increasing the offer. Because of its low price, several such apparatuses of different sizes may be available in a single workshop, thus allowing the optimization of the size of the equipment to the dimensions of the parts to be consolidated. This is not the case with autoclaves, which are generally used as "one size fits them all", sometimes leading to a 3 or 4 m long autoclave used for consolidating small size composite parts. The process cycle is also considerably shorter and cheaper as only the laminate needs be heated and cooled instead of the whole inner volume of an autoclave. Likely, each bladder can be inflated / deflated very rapidly, unlike an autoclave requiring time for the pressure to build up in the whole inner volume thereof. It follows that the kit of parts of the present invention may be used for the manufacturing of composite parts in the fields usually using autoclave forming, such as aeronautics, space, and satellite industries, but also in fields generally reluctant to use prepregs because of the cost of the parts, such as in naval and even automotive industries.

### Brief description of the Figures

For a fuller understanding of the nature of the present invention, reference is made to the following detailed description taken in conjunction with the accompanying drawings in which:
- Figure 1:: shows schematic side views of an apparatus according to two embodiments of the present invention.
- Figure 2:: shows three embodiments (a)-(c) of bladder geometries arranged side by side to form a mattress, and (d) the pressure pattern formed by the bladders of the mattress (a) at five different times of the process.

### Detailed description of the invention

The process of the present invention has in common with autoclave forming all the steps involving the preparation of a layup (3) made of stacked plies (3a) of pre-impregnated fibre reinforced resin, enclosing it into a sealed vacuum bag (4) provided with at least one vacuum port, and connecting said port to at least one vacuum port to a source of vacuum (10a) for evacuating the air present in the bag. This is advantageous; because the operators trained for autoclave forming can apply their skills as such in the present process. Since all the foregoing operations are well known to the persons skilled in the art, they will not be explained in details here. Note that any prepreg can be used, comprising a combination of any type of reinforcing fibres, such as carbon fibres, glass fibres, aramide fibres, and the like, with any type of polymeric matrix, be it thermoplastic such as PEEK, PEKK, PEI, PA, PET, and the like, or thermoset such as epoxy, polyester, and the like. The fibres may be arranged in any configuration most suitable for a given application: unidirectional, any 0-45-90° stacking sequence, woven, braided, and the like. Similarly, any vacuum bag available on the market can be used, as long as it supports the consolidation temperature which is mostly determined by the matrix used.

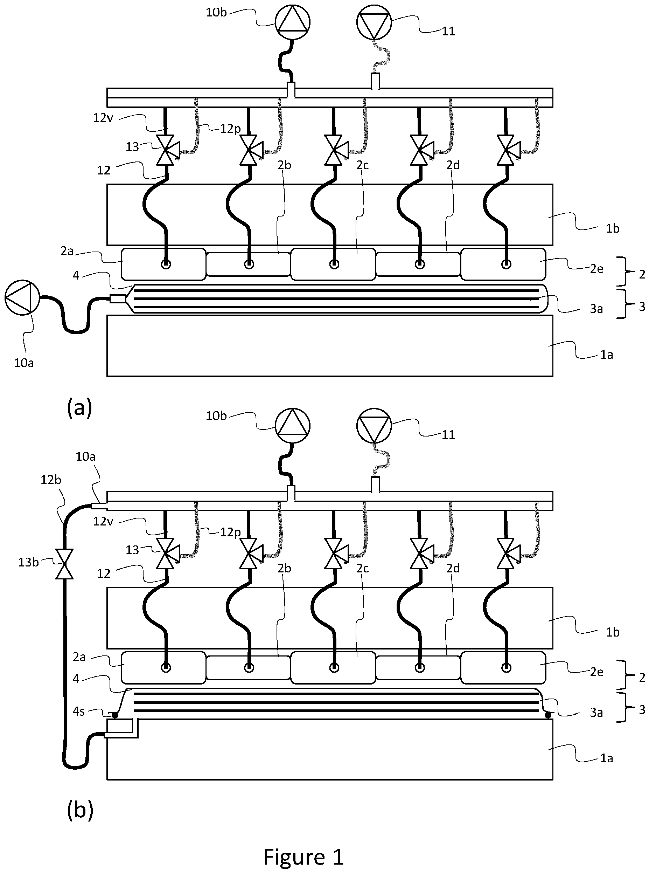

The vacuum bag (4) must define an inner volume suitable for containing a layup (3) made of different plies of prepreg material. As illustrated schematically in Figure 1(a), the inner volume of the vacuum bag (4) can be defined by two sheets sealed around the whole perimeter thereof, but for the vacuum ports. In this embodiment, the layup is generally enclosed in the vacuum bag prior to laying the bag containing the layup onto the first main surface of the front mould. This embodiment can be advantageous to prevent entrapment of dust on the layup surface, as the vacuum bag can be sealed in a separate, clean room. Alternatively and as schematically illustrated in Figure 1 (b), the inner volume of the vacuum bag can be defined by a sheet sealed with sealing means (4s) over the whole perimeter thereof to the first main surface of the front mould. In this embodiment, the layup is first laid onto the front mould and a sheet is laid over the layup and sealed to the first surface of the front mould. For large parts requiring large moulds, this operation must be carried out in the workshop where the tool is located. Having the layup in direct contact with the first main face of the front mould permits a resultant surface quality of a composite laminate generally superior to the former embodiment, wherein a sheet of the vacuum bag (4) is interposed between the layup (3) and the front mould first main face (1 a), as it can be difficult to avoid the formation of folds in such sheet. The number and distribution of vacuum ports can also be varied at will. Optimum results can be obtained if the number and distribution of vacuum ports in the vacuum bag are designed as a function of the bladders geometry and distribution in the mattress, and with the displacement pattern of the pressurized zone defined by the inflated bladders as a function of time, as will be discussed more in detail in continuation.

Where the process of the present invention dramatically differs from autoclave forming is in the apparatus the vacuum bag is to be laid into. It comprises a tool comprising a first, front mould (1a) defining a first main face of the laminate and a second, movable, back mould (1 b) which, in operating position, is separated from the first, front mould by a gap. The mould should be such as to maintain the gap dimensions substantially constant during the consolidation process, when bladders are being pressurized and deflated, In its simplest form a metal frame can be used to ensure the stiffness of the structure, on which are coupled the front and back moulds (1a, 1b). The frame can advantageously be hinged such that the back mould can be moved from an open position to its operating position defining a gap between the two mould parts. Any variation and functional feature for simplifying the handling of the front and back moulds can be implemented in the present apparatus without departing from the scope of the invention.

The gist of the invention is the use of a mattress (2) made of several individually inflatable bladders (2a-2e) arranged in a side by side configuration, wherein each bladder is individually connected to a source of pressurized gas (11) and to a source of vacuum (10b). The dimensions of the mattress must be such that the whole area of the layup (3) enclosed in the vacuum bag (4) is covered by the mattress when laid on top of the vacuum bag. Each bladder may be connected to a first pipe (12p) coupled with a valve to a source of pressurized gas and a second pipe (12v) coupled with a valve to a source of vacuum. In an advantageous embodiment illustrated in Figure 1, however, one pipe (12) only is connected to each bladder and is coupled to a three-way valve (1 3), with a first connecting line (12p) coupled to a source of pressurized gas and a second connecting line (12v) coupled to a source of vacuum. Connecting lines (12p) and (12v) are advantageously connected to two distinct chambers of a manifold, each chamber being fluidly coupled to the source of pressurized gas (11) and of vacuum (10b), respectively (cf. Figure 1(a)&(b)). As illustrated in Figure 1(b), the source of vacuum (10b) used to deflate the bladders can be the same source (10a) used to evacuate gas from the vacuum bag as the inner volume of the latter can be connected to the manifold linked to vacuum pump (10b) via a tube (12b) provided with a valve (12b). Alternatively, as illustrated in Figure 1(a), it can be a different source. Pumps are usually used as the sources of both pressurized gas and vacuum. A source of compressed air can be used instead of a pump or compressor as source of pressurized gas.

The mattress (2) is sandwiched between the vacuum bag (4) containing the layup (3) and the back mould (1 b) when in operating position. In other words, the front mould supports one main surface of the vacuum bag (4): the opposite main surface of the vacuum bag contacts the mattress (2), which is itself in contact with the back mould (1b). The gap defined by the front and back moulds when in operating position should be such that the vacuum bag (4) containing the layup (3) and the mattress (2) with deflated bladders (2a-2e) snuggly fit between the front and back moulds. Once the layup is enclosed in the vacuum bag, and the mattress are positioned between the front and back moulds, consolidation of the laminate can initiate as follows.

The vacuum bag (4) is evacuated by activating the source of vacuum (10a), usually a vacuum pump. The temperature of the layup (3) is raised to the consolidation temperature. Heating of the layup is achieved by activating heating means. Heating means can be electrical or fluid heaters arranged in the front and/or back moulds. Since the layup (3) is separated from the back mould by the mattress, which acts as a thermal insulator, any heating means arranged in the back mould have a limited efficacy. It is therefore preferred that most of the heating be provided by the front mould, which contacts the vacuum bag directly. A radiation reflecting sheet, like an aluminium foil can be provided between the vacuum bag and the mattress to reflect back part of the heat reaching the mattress. Alternatively, a flexible heating sheet can be provided between the vacuum bag and the mattress to heat the back surface of the layup. A flexible heating sheet is comparable with a heating blanket, comprising a support sheet which must be flexible, and comprising electrical wires embedded therein, through which current is circulated to produce heat by the Joule effect. In yet an alternative embodiment, induction coils can be embedded in the front and back moulds, and a sheet of highly conductive material, like steel can be provided contacting each main surface of the vacuum bag. Heat can thus be induced very locally. If a sheet of the vacuum bag contacts the front surface of the vacuum bag as illustrated in Figure 1(a), it should be smooth, so that a good surface quality can be achieved in the front surface of the consolidated laminate. The sheet contacting the back surface of the vacuum bag, on the other hand, needs be very flexible, to transmit the pressure variations of the bladders to the layup. In applications wherein the surface quality of the back surface of the consolidated laminate is not so important, a metal fabric, such as e.g., knitted steel wires, can be used to ensure maximum flexibility and drapeability. The front surface of the laminate and of the vacuum bag are understood here as being the surface contacting the front mould. Similarly, the back surface of the laminate or the vacuum bag is understood as the surface facing the back mould, and contacting the mattress.

As the temperature of the layup is being increased, or when it reaches the consolidation temperature, at least a first bladder (2a) of the mattress (2) is inflated, while at the same time a second bladder (2b) of the mattress is deflated with vacuum. Preferably each bladder is intermittently inflated and deflated at least twice during the consolidation process. A pressurized zone applying a pressure onto the layup can be defined at one moment in time by the bladders being inflated at said time. By appropriately controlling the inflating and deflating of the individual bladders, it is possible to define a pressurized zone of definite shape, moving at a controlled rate and direction across the area of the layup during the consolidation process. This moving pressurized zone can be used to literally drive any gas entrapped in the vacuum bag towards a vacuum port. The deflating of the bladders not only defines the shape and displacement rate of the pressurized zone, but also contributes to dislodging any air bubble trapped between fibres or between plies. Indeed, as gas is being pulled out of a bladder, the portion of vacuum bag in contact with said bladder is sucked up momentarily, thus creating a local vibration able to detach any clinging gas bubble in the laminate. Not wishing to be bound by any theory, it is believed that this mechanism combined with the sudden rise of pressure in a bladder creates a hammer effect of high efficacy for the evacuation of any gas entrapped in the layup.

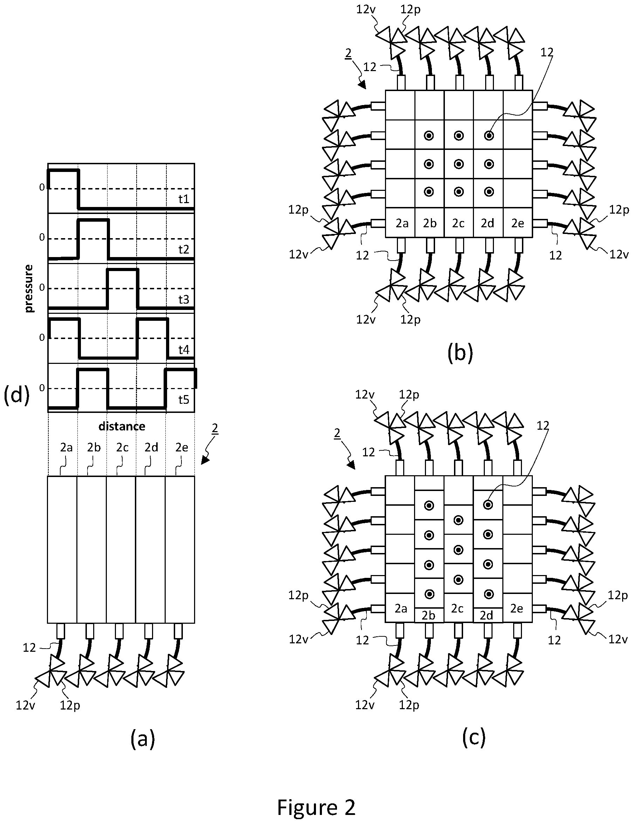

The optimal number, size, and geometry of the bladders depend on each specific application. As discussed above the shape of the pressurized zone is determined by the shape and relative arrangement of each bladder over the surface of the mattress. Figure 2 shows three possible embodiments of bladder geometries and arrangements. Figure 2(a) illustrates a first bladder configuration, wherein each bladder extends in a first direction along the whole length of the mattress, and said bladders are disposed side by side over the whole length of the mattress along a second direction transverse to the first direction over the whole width of the mattress. This geometry has one great advantage, in that all the bladders have at least one portion located on the perimeter of the mattress (2), where a tube (12) can be connected to for bringing the interior of each bladder in fluid communication with a source of pressurized gas (11) and a source of vacuum (10b). Figure 2(d) schematically illustrates a possible pattern of the position and shape of the pressurized zone at five different times, t1-t5. With this configuration of the pressurized zone, it is preferred that at least one vacuum port is located on the right hand side of the vacuum bag sandwiched between the mattress and the front mould. It can be seen in Figure 2(d) that at a time, t1, the bladder (2a) only is pressurized. At time, t2, the bladder (2a) is deflated and the adjacent bladder (2b) to the right is inflated. This movement dislodges gas bubbles trapped in the layup and pushes them in the right direction. Next, at time, t3, the pressurized zone moves one incremental step further to the right, by deflating bladder (2b) and inflating bladder (2c). At time, t4, the bladder (2d) is inflated to continue the right movement of the first pressure "wave", and a second pressure "wave" is initiated by inflating again bladder (2a), to further dislodge any clinging gas bubble. At time, t5, the two pressure "waves" continue their movement, pushing gas bubbles from the left hand side of the layup towards the right of the vacuum bag, where one or more vacuum ports are provided. This translation of successive waves of pressurized zones can be repeated several times and at any desired rate.

Figure 2(b)&(c) illustrate two alternative embodiments, wherein several bladders (2a-2e) are disposed side by side over the whole length of the mattress along a first direction and along a second direction transverse to the first direction over the whole width of the mattress. In Figure 2(b) the bladders form rows of substantially straight lines in both directions, like a chessboard. Alternatively, the bladders can be arranged in a staggered pattern as illustrated in Figure 2(c). Any other geometry and arrangement of bladders is possible depending *inter alia* on the actual geometry of the part to be consolidated. For example, the bladders can be concentric. Such mattress is most advantageously used with a vacuum bag provided with vacuum ports distributed around the perimeter thereof. Waves of pressurized zones can be generated to propagate radially from the centre of the mattress towards the perimeter thereof, thus dislodging and driving gas bubbles radially out towards the vacuum ports of the vacuum bag.

The tubes (12) linking bladders not having an access to the perimeter of the mattress, as the central bladders illustrated in Figure 2(b)&(c) or the inner bladders in an assembly of concentric bladders, to a source of pressurized gas and of vacuum must be connected to a wall thereof which is on a main surface of the mattress, preferably the back surface, as illustrated by double circles (12) in Figure 2(b)&(c). Since the back surface of the mattress applies a substantial pressure onto the back mould where a bladder is inflated, it is preferred that tubes (12) be accommodated in the second, back mould (1 b); a first end of each tube being connectable to a three way valve (13) in fluid communication with a source of pressurized gas (11) and of vacuum (10b). The second end of each tube emerges out of the face of the second, back mould (1b) in contact with the mattress (2), at positions corresponding to the positions of the ports provided on each bladder (2a-2e). With such arrangement, any bladder configuration can be used in the present process, without any hindrance between the tubes (12) and the tool front and back moulds (1 a, 1 b).

In order to control the shape and translation direction and rate of the one or several successive waves of pressurized zones, the valves (13) of each connecting line are advantageously controlled by a central processing unit (CPU). The CPU controls each three way valve (13) corresponding to each bladder, to bring them in fluid connection with a source of pressurized gas (11) or a source of vacuum at different moments in time, following a pre-established pattern. In case two distinct tubes run from each bladder to a source of pressurized gas and vacuum, respectively, each tube is provided with a valve controlled similarly by a CPU (not represented in the Figures).

The bladders may be inflated to a pressure of up to 10 bar; generally not more than 7 bar pressure is required. In most cases, a lower pressure is sufficient to yield a fully consolidated laminate. It has been observed that laminates with similar mechanical properties were obtained with the present process using pressures substantially lower than the ones used in autoclave forming. Not wishing to be bound by any theory, it is believed that this can be explained by the dynamic form of pressure application used in the present process which helps to dislodge clinging gas bubbles and driving them towards a vacuum port, compared with a static form of pressure applied in autoclaves, which does not contribute to dislodging and moving away clinging gas bubbles, but merely to compressing them. For this reason, in many applications, fully consolidated laminates can be obtained with inflating pressures of the bladders of not more than 5 bar, even not more than 2 or 3 bar.

The bladders must be made of a material which is flexible enough to clearly define a pressurized zone upon inflating and deflating thereof. The material must of course be impervious to the pressurized gas used to inflate the bladders, and should be resistant to both inflating pressure and consolidation temperature. High temperature resistant silicones readily available on the market can be used for the bladders. For consolidation temperatures below 200°C polyamide films or polyester films like Mylar^{®} can be used, and for higher consolidation temperatures, PEEK films or polyimide films can be used instead. For increasing the mechanical resistance of the bladders to internal pressure, the bladder walls may be reinforced or lined with reinforcing fibres, such as glass fibres. Metal sheets can also be used.

Table 1 compares a number of properties of the present process with the ones of autoclave forming.

**Table 1: properties comparison between the present process and autoclave forming.**

| **Properties** | **Autoclave forming** | **Invention** |
|---|---|---|
| **Equipment cost** | **High** | **Low** |
| **Process flexibility** | Low (one size fits them all)· dimensions of the parts are limited by the size of the autoclave | High· moulds and mattress geometry can be adapted in a case by case basis. |
| **Heating rate** | Low· the whole inner volume of the autoclave must be brought to consolidation temperature | High· local heating of the vacuum bag containing the layup. |
| **Consolidation pressure** | High· static pressure | Lower· dynamic pressure |
| **Energy consumption** | High· the whole inner volume of the autoclave must be brought to consolidation pressure and temperature | Lower· local heating of the vacuum bag containing the layup, and pressurizing of individual bladders only |
| **Cycle time** | Long· heating, pressurization and cooling of the autoclave is time consuming | Shorter· local heating of the vacuum bag containing the layup, and pressurizing of individual bladders only |
| **Consolidation level of laminate** | High | high |
| **Production cost** | High | Lower |
| **Fields of application** | Limited due to the high cost | Numerous, because of low cost |

It can be seen from Table 1 that the process of the present invention has numerous advantages over autoclave forming for a similar level of consolidation of the composite laminates thus produced. This permits to extend the fields of applications of composite laminates to technical areas, like transportation industries (naval, automotive, and the like) and energy (e.g., windmill blades), which are not traditional users of autoclave forming as would be today the aeronautics and space industries.

## Claims

1. Process for consolidating a fibre reinforced laminate comprising the following steps:
(a) Providing a tool comprising a first, front mould (1 a) defining a first main face of the laminate and a second, movable, back mould (1 b) which, in operating position, is separated from the first, front mould by a gap,
(b) Stacking several plies (3a) of a pre-impregnated fibre reinforced polymer to form a layup (3),
(c) Laying the layup (3) onto the first, front mould (1 a) and enclosing it into a vacuum bag (4) comprising a vacuum port connected to a source of vacuum (10a),
(d) Laying on top of the vacuum bag (4) a mattress (2) formed by at least two inflatable bladders (2a-2e), said mattress covering substantially the whole surface of the laminate (3),
(e) Positioning the second, back mould (1 b) into its operating position, wherein the gap between first, front mould (1a) and second, back mould (1b) is such that the vacuum bag (4) containing the layup (3) and the mattress (2) with deflated bladders (2a-2e) snuggly fit between the front and back moulds,
(f) Bringing the temperature of the layup to its consolidating temperature and activating the vacuum pump (10a) to decrease the pressure inside the vacuum bag,
**Characterized in that**,
(g)Each bladder (2a-2e) of the mattress (2) is connected to a source of pressurized gas (11) and to a source of vacuum (10b), and **in that**
(h)A first bladder (2a) of the mattress (2) is inflated, while at the same time a second bladder (2b) of the mattress is deflated with vacuum.

2. Process according to claim 1, wherein each bladder is intermittently inflated and deflated at least twice during the consolidation process.

3. Process according to claim 1 or 2, wherein the bladders are inflated to a pressure up to 10 bar, preferably, the bladders are inflated to a pressure of not more than 7 bar, more preferably not more than 5 bar, most preferably, not more than 2 bar.

4. Process according to any of the preceding claims, wherein the pressurized zone of the mattress formed by the pressurized bladders applies a pressure onto a first portion of the vacuum bag remote from the at least one vacuum port and moves towards said vacuum port.

5. Process according to the preceding claim, wherein the pressurized zone moving from the first portion of the vacuum bag towards said vacuum port forms a pressurized line, and said pressurized line preferably moves towards the vacuum ports at least twice.

6. Process according to the preceding claim, wherein the pressurized zone forms a closed loop line starting from a central point of the mattress and advancing radially towards the periphery of the mattress, the vacuum bag preferably comprising several vacuum ports arranged around the periphery thereof.

7. A kit of parts for the consolidation of a fibre reinforced laminate comprising
(a) a tool comprising a first, front mould (1 a) defining a first main face of the laminate and a second, movable, back mould (1 b) which, in operating position, is separated from the first, front mould by a gap,
(b)a sheet material suitable for forming a vacuum bag (4) provided with at least one vacuum port connectable to a source of vacuum (10a) and defining an inner volume suitable for containing a layup (3) made of different plies of prepreg material;
(c) a mattress (2) formed by at least two inflatable bladders (2a-2e), said mattress covering substantially the whole area of a main surface of the first vacuum bag (4),
(d) heating means for heating an object located within the gap between front and back moulds (1a, 1 b),
(e) a source of pressure (11) and a source of vacuum (10b) connectable to each bladder (2a-2e) of the mattress individually,
(f) Control means for bringing in fluid communication the source of pressure (11) and the source of vacuum (10b) with each bladder individually,
Wherein the gap between the front (1 a) and back moulds (1 b), when in operating position is such that the vacuum bag filled with a laminate (3) to be consolidated and the mattress stacked thereon with deflated bladders fit snuggly between the front and back moulds.

8. A kit of parts according to the preceding claim, wherein said control means comprise a valve system (13), which is preferably controlled by a CPU.

9. A kit of parts according to claim 7 or 8, wherein each bladder extends in a first direction along the whole length of the mattress, and such bladders are disposed side by side over the whole length of the mattress along a second direction transverse to the first direction.

10. A kit of parts according to claim 7 or 8, wherein several bladders are disposed side by side over the whole length of the mattress along a first direction and along a second direction transverse to the first direction over the whole width of the mattress, the bladders preferably forming rows of substantially straight lines in the two directions or, alternatively, being arranged in a staggered pattern.

11. A kit of parts according to the preceding claim, wherein tubes (12) are accommodated in the second, back mould (1 b); a first end of each tube being connectable to a three way valve in fluid communication with a source of pressurized gas (11) and of vacuum (10b) and the second end of each tube emerging out of the face of the second, back mould (1 b) in contact with the mattress (2), said second ends being connectable and located at positions corresponding to ports provided on each bladder (2a-2e) .

12. kit of parts according to any of claims 7 to 11, wherein the heating means are located in the front mould and optionally in the back mould,

13. kit of parts according to any of claims 7 to 12, wherein the inner volume of the vacuum bag (4) is defined by two sheets sealed around the whole perimeter thereof, but for the vacuum ports or, alternatively, is defined by a sheet sealed over the whole perimeter thereof to the first main surface of the front mould.

14. Use of a mattress (2) formed by at least two inflatable bladders (2a-2e) each connected to a source of vacuum (10b) and to a source of pressure (11) for dislodging and displacing air bubbles entrapped in a fibre reinforced multiply laminate upon consolidation thereof.

15. Use of a kit of parts according to any of claims 7 to 11 for the manufacturing of composite parts in the fields of aeronautics, automotive, naval, satellites, and space industries.
